**Europäisches Patentamt**

**European Patent Office**

**Office européen des brevets**

(19)

(11) Veröffentlichungsnummer : **0 396 676 B1**

(12)

# EUROPÄISCHE PATENTSCHRIFT

(45) Veröffentlichungstag der Patentschrift :
**19.11.92 Patentblatt 92/47**

(51) Int. Cl.⁵ : **F02F 1/42,** F01L 1/26

(21) Anmeldenummer : **89911242.9**

(22) Anmeldetag : **20.10.89**

(86) Internationale Anmeldenummer :
**PCT/CH89/00184**

(87) Internationale Veröffentlichungsnummer :
**WO 90/05842 31.05.90 Gazette 90/12**

(54) **VERBRENNUNGSMOTOR.**

(30) Priorität : **18.11.88 CH 4298/88**

(43) Veröffentlichungstag der Anmeldung :
**14.11.90 Patentblatt 90/46**

(45) Bekanntmachung des Hinweises auf die
Patenterteilung :
**19.11.92 Patentblatt 92/47**

(84) Benannte Vertragsstaaten :
**CH DE FR GB IT LI SE**

(56) Entgegenhaltungen :
**DE-A- 3 600 408**
**US-A- 4 617 896**
**US-A- 4 627 400**

(73) Patentinhaber : **JOHANNES, Nicholas J.**
**Rothstrasse 30**
**CH-8042 Zürich (CH)**

(72) Erfinder : **JOHANNES, Nicholas J.**
**Rothstrasse 30**
**CH-8042 Zürich (CH)**

(74) Vertreter : **Troesch Scheidegger Werner AG**
**Patentanwälte, Siewerdtstrasse 95, Postfach**
**CH-8050 Zürich (CH)**

EP 0 396 676 B1

# Beschreibung

Die Erfindung betrifft einen Verbrennungsmotor mit mindestens einem Auslassventil und mehr als einem Einlassventil pro Zylinder sowie mit einer Steuereinrichtung für die Einlass- und Auslassventile.

Weil die Leistung eines Verbrennungsmotors mit der Hubraumgrösse der einzelnen Zylinder und der Drehzahl zunimmt aber bei grossem Hubraum die zu bewegenden Massen der Kolben gross sind, wodurch die Drehzahl begrenzt wird, werden Hochleistungsmotoren vielzylindrig mit entsprechend kleinerem Hubraum des einzelnen Zylinders und für hohe Drehzahlen gebaut, die aber dafür in den unteren Drehzahlbereichen an Drehmoment einbüssen. Um sowohl bei niedrigen als auch bei hohen Drehzahlen einen die Motorleistung bestimmenden optimalen Gaswechsel im Zylinder zu erreichen, wurden bereits verschiedene Lösungsvorschläge gemacht, wie etwa in der Länge verstellbare Ansaugkanäle, weil für eine elastische und drehmomentstarke Motorcharakteristik der Ansaugkanal eng und lang, für die höchstmögliche Leistung des Motors aber relativ kurz und im Durchmesser gross sein soll. Bei anderen Lösungsvorschlägen kommt ein bei Teillast halbgeschlossener Doppelvergaser oder eine abschaltbare Ventilbetätigung zur Anwendung, mit denen jedoch nur Teilerfolge erzielbar sind.

Ein weiterer Vorschlag in dieser Richtung ist die variable Ventilsteuerung, mit welcher für die verschiedenen Drehzahlbereiche mit unterschiedlichen Nockenprofilen verschiedene Ventilhubhöhen und unterschiedlich grosse Ventilüberschneidungen eingestellt werden können. Ventilüberschneidungen stellen eine schon seit langem im Motorenbau angewendete Methode zur Leistungssteigerung dar. Dabei wird das am Schluss des Auspufftaktes durch die Masse der entweichenden Gassäule entstehende geringe Vakuum im Auslasskanal ausgenutzt, wobei durch frühzeitiges Oeffnen des Einlassventils das Auspuffvakuum das unter leichtem Ueberdruck stehende Frischgas ansaugt, sodass aufgrund der Beschleunigung der Gassäule eine grössere Füllmenge erreicht wird. Je länger beim Zylinder der Weg vom Einlassventil zum Auslassventil ist, desto früher kann das Einlassventil geöffnet werden, ohne dass Frischgas im Auspuff entweicht. Dieser Umstand ist jedoch noch nicht konsequent im Mehrventil-Motorenbau ausgenutzt worden.

Es gibt zwar seit längerer Zeit Mehrventilmotoren, bei denen jedoch die Ueberschneidungszeiten sehr klein gehalten werden müssen, weil die nahe gegenüberliegenden Einlassventile und Auslassventile jeweils simultan geöffnet werden. Die mit Mehrventilmotoren erzielbaren Vorteile bestehen darin, dass man mit keineren und somit leichteren Ventilen höhere Drehzahlen erzielt und dass aufgrund des Umstands, dass der Gesamtumfang zweier Ventilteller grösser ist als der Umfang eines einzigen wenn auch grösseren Ventiltellers, ein grösserer Gasdurchsatz erreicht werden kann. Wenn jedoch eine bessere Füllmenge im Zylinder und eine für die gleichmässige schnelle Verbrennung der Gaspartikel sehr erwünschte Turbulenz, die durch das drallförmige Einströmen des Gasstroms in den Zylinder aufgrund der Anordnung des Einlassventils seitlich zur Achsmitte ensteht, im Motorenbau schon lange bekannte Vorteile von Zweiventilmotoren darstellen, so gehen diese Vorteile bei den heute bekannten Mehrventilmotoren wieder verlustig, weil bei mehreren Einslassventilen weniger vorteilhafte Kollisions-Turbulenzen entstehen, sodass die dadurch bedingte langsamere und unregelmässige Verbrennung insbesondere bei höherem Gasdurchsatz und Drehzahlen zu Selbstzündungen führt. Die gewünschte Turbulenz mit Strudelbildung kann zwar entstehen, wenn bei einem Mehrventil-Motor bei Teillast einer der beiden Einlasskanäle geschlossen wird, doch bricht dieser Strudel sofort wieder zusammen, sobald bei grösserer Last der benachbarte Einlasskanal geöffnet wird und die zuvor erwähnten nachteiligen Turbulenzen wieder entstehen.

Aus der DE-OS-36 00 408 ist bekannt, dass im Teilastbereich, also wenn nur einer oder vielleicht zwei Einlasskanäle geöffnet sind, der gewünschte Gasstrudel im Zylinder erzeugt wird. Gemäss dieser Erfindung ist man der Ansicht, dass dieser Strudel bzw. dieser Drall bei höheren Drehzahlen störend sei, da er mit einem Leistungsverlust verbunden ist. Aus diesem Grund bricht dieser Strudel bei Vollast und Oeffnen sämtlicher Einslasskanäle zusammen, und eine willkürliche Kollisionsturbulenz entsteht. Allerdings sind die mit einer derartigen Anordnung erzielten Resultate insbesondere im Höchstleistungsbereich eher enttäuschend.

Die der vorliegenden Erfindung zugrunde liegende Aufgabe bestand darin, einen Mehrventilmotor zu schaffen, bei dem für eine gleichmässige und schnelle Verbrennung der Gaspartikel der Gasstrom drallförmig unter Ausbildung einer gewünschten Turbulenz in den Zylinder einströmt und in diesem eine bessere Füllmenge mit dem Ergebnis einer Leistungssteigerung erzielt wird, bei dem dies ausserdem auch durch lange Ueberschneidungszeiten realisierbar ist und welcher Motor ferner nicht nur eine über hohe Drehzahlen erreichbare Spitzenleistung sondern auch bei niedrigen Drehzahlen ein starkes Drehmoment aufweist. Zur Lösung dieser Aufgaben weist der Motor die Merkmale gemäss Anspruch 1 auf. Da jeder Einlasskanal eine eigene Luftklappe und eine eigene Kraftstoffzuführung aufweist, die zusammenhängend regulierbar sind, erzielt man eine Optimierung der Kraftstoffaufbereitung und lässt sich das erfindungsgemässe Verfahren zum Betrieb des Motors (siehe Anspruch 4) in der Weise realisieren, dass für niedrige Motordrehzahlen mindestens ein Einlasskanal mittels der Luftklappe geöffnet wird und dass für steigende Motordrehzahlen die Einlasskanäle zeitlich gestaffelt mittels der jeweiligen Luftklappe geöffnet werden, wobei der vom Auslassventil am weitesten entfernt liegende Einlasskanal als erster geöffnet wird, durch welche Massnahme grössere Ventilüberschneidungszeiten erreichbar sind.

Bei einer bevorzugten Ausgestaltung münden von einer Mehrzahl getrennter Einlasskanäle mindestens einer im wesentlichen von oben und mindestens ein weiterer Einlasskanal von der Seite schräg mit bei jedem zusätzlichen schrägen Einlasskanal in die gleiche Umfangsrichtung zeigender Schrägstellung in den Zylinderkopf. Es können demnach zwei oder drei oder auch vier Einlasskanäle vorhanden sein, die über den Umfang des Zylinderkopfes verteilt im wesentlichen in gleichen Winkelabständen angeordnet sind. Es können zwei Einlasskanäle von oben und zwei Einlasskanäle von der Seite schräg in den Zylinderkopf münden, aber sie münden dabei immer mehr oder weniger ausgeprägt in die gleiche Umfangsrichtung zeigend derart in den Zylinderkopf, dass der Gasstrom drallförmig in den Zylinder einströmt und die gewünschte Turbulenz entsteht.

Pro Zylinder können ein oder auch zwei Auslassventile vorgesehen sein. Bei jeder Zylinderreihe sind jedoch die Auslasskanäle auf der gleichen Seite angeordnet. Bei bekannten Mehrventilmotoren mit Drallcharakteristik ergibt sich bei auf den einzelnen Zylinder von oben gesehen überkreuz angeordneten Auslasskanälen und Einlasskanälen eine sehr umständliche Konstruktion.

Im zweckmässiger Ausgestaltung weisen die Einlasskanäle eine unterschiedliche Grösse ihres lichten Querschnitts auf, womit unterschiedliche Gasgeschwindigkeiten erreicht werden. Auf diese Weise lassen sich beim aufeinanderfolgenden Zuschalten der einzelnen Einlasskanäle für höhere Drehzahlbereiche für stufenweise geringere Gasgeschwindigkeiten ausgelegte Einlasskanäle aufeinanderfolgend öffnen. Mit dieser Ausgestaltung wird der Zylinder bei zunehmender Hubstellung und Hubgeschwindigkeit des Kolbens optimal beschichtet und der Strudel bremst auch bei maximalen Hub nicht ab. Insgesamt erzielt man durch die variable Kanal-Zuschaltung eine höhere Maximalleistung bei guter Drehmomentcharakteristik.

Weitere Einzelheiten und Vorteile der Erfindung ergeben sich aus der nachfolgenden Beschreibung und den Zeichnungen, in denen die Erfindung rein beispielsweise dargestellt ist. Es zeigen:

Fig. 1 schematisch und in schaubildlicher Darstellung einen Dreiventil-Zylinderkopf mit zugehörigen Kanälen;

Fig. 2 eine Draufsicht auf den Zylinderkopf gemäss Fig 1, ohne Klappen und Düsen;

Fig. 3 eine Draufsicht schematisch auf einen Dreiventil-Zylinderkopf mit abweichender Anordnung der Ventile und Kanäle;

Fig. 4 eine Draufsicht schematisch auf einen Vierventil-Zylinderkopf;

Fig. 5 eine Draufsicht schematisch auf einen Vierventil-Zylinderkopf mit abgewandelter Anordnung der Kanäle und Ventile;

Fig. 6 eine Draufsicht schematisch auf einen Fünfventil=Zylinderkopf.

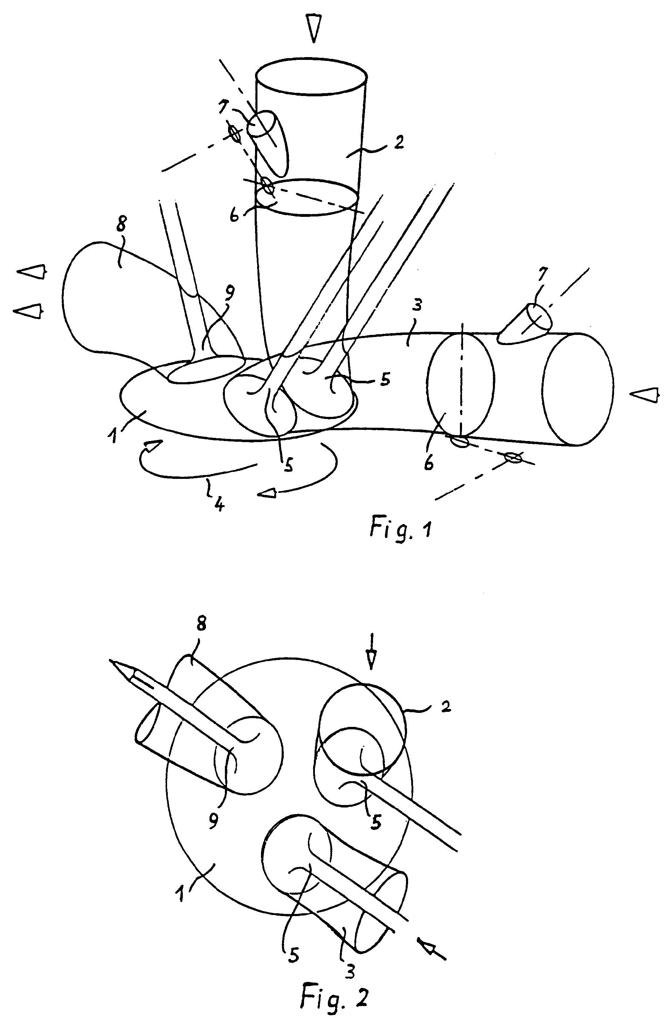

Gemäss Fig. 1 münden in den Zylinderkopf 1 eines nicht weiter dargestellten Zylinders eines Verbrennungsmotors ein erster Einlasskanal 2 im wesentlichen von oben und ein weiterer Einslasskanal 3 schräg von der Seite in Umfangsrichtung zeigend, sodass der Gasstrom drallförmig gemäss den Pfeilen 4 in den Zylinder einströmt. Die beiden Einlasskanäle 2 und 3 sind jeweils durch ein Ventil 5 abgeschlossen. Ferner besitzt jeder Einlasskanal eine Luftklappe 6 und eine Kraftstoffzufuhr 7, die zusammenhängend regulierbar sind. Je nach Klappenstellung wird dementsprechend Kraftstoff aufbereitet. Für niedrige Drehzahlen wird nur ein Einlasskanal geöffnet und für höhere Drehzahlen dann zusätzlich der zweite Einlasskanal geöffnet.

Den beiden Einlasskanälen 2 und 3 gegenüber ist ein Auslasskanal 8 mit einem Auslassventil 9 angeordnet. Die Ventilteller der Einlassventile 5 und der Ventilteller des Auslassventils 9 stehen schräg in Bezug auf den Zylinderkopf 1. Diese Anordnung wirkt sich vorteilhaft auf die Gasführung aus, wobei die schräg stehenden Einlass-Ventilteller die Gase so lenken, dass der Gasstrom strudelrichtend in den Zylinder fliesst. Die Einlasskanäle müssen also nicht steil gegen die Ventilteller verlaufen und die Ventile können kürzer und damit leichter gebaut werden, was sich auf die Ausmasse des Zylinderkopfes günstig auswirkt bzw. höhere Drehzahlen zulässt.

Aus Fig. 1 und 2 geht auch hervor, dass die im Winkel zueinander stehenden Ventile durch zwei oben liegende, nicht dargestellte Nockenwellen gesteuert werden.

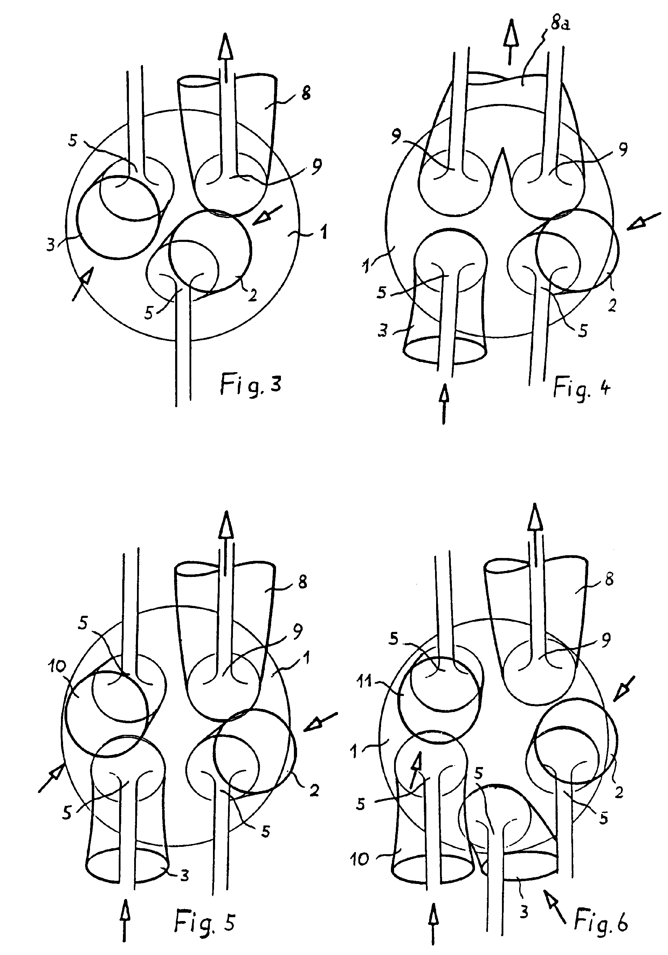

Nach dem gleichen Prinzip gemäss Fig. 1 und 2 sind auch die weiteren Ausführungsformen gemäss den Figuren 3-6 ausgebildet, wobei zur Vereinfachung der Darstellung die Luftklappen und Kraftstoff zufuhr in den Einlasskanälen weggelassen sind. Die Ausführungsform gemäss Fig. 3 unterscheidet sich von der zuvor beschriebenen nur dadurch, dass ein Einlasskanal mit dem zugehörigen Einlassventil und der Auslasskanal mit dem Ventil auf der einen Seite und nur ein Einlasskanal auf der gegenüberliegenden Seite ist, sodass die eine Nockenwelle ein Einlassventil und ein Auslassventil und die andere Nockenwelle nur ein Einlassventil steuert.

Bei der Ausführungsform gemäss Fig. 4 sind zwei Auslassventile vorhanden, denen ein gemeinsamer Auslasskanal 8a zugeordnet ist. Bei zwei Auslassventilen schliesst das eine Ventil später als das andere. Wenn in Fig. 4 beispielsweise das linke Auslassventil 9 später schliesst, dann hat der Einlasskanal 2, dessen in Fig. 4 nicht dargestellte Luftklappe zuerst öffnet, auch eine geringfügig frühere Ventil-Oeffnungszeit und befindet sich am weitesten entfernt vom zuletzt schliessenden Auslassventil 9. Dadurch können grössere Ventilüberschneidungszeiten errecht werden.

Die Ausführungsform gemäss Fig. 5 besitzt nur einen Auslasskanal 8 mit dem Auslassventil 9, aber zusätzlich zu den beiden in Fig. 1 dargestellten Einlasskanälen 2 und 3 noch einen dritten Einlasskanal 10.

Bei der Ausführungsform gemäss Fig. 6 ist zusätzlich noch ein vierter Einlasskanal 11 vorhanden und die Kanäle und ihre zugehörigen Ventile sind etwas enger stehend auf dem Zylinderkopf 1 angeordnet und in jedem Fall so, dass die Kanäle durch ihre Richtung einen Strudel im Uhrzeigersinn innerhalb des Zylinders erzeugen, d.h. die Kanäle münden mit in die gleiche Umfangsrichtung zeigender Schrägstellung in den Zylinderkopf. Die Ventile in den einzelnen Einlasskanälen und in dem Auslasskanal sind in zwei Gruppen so angeordnet, dass sie in einem Winkel stehen und von zwei obenliegenden Nockenwellen betätigt werden können.

Bei einer Mehrzahl von Einlasskanälen sind diese in ihrem lichten Querschnitt unterschiedlich gross, um unterschiedliche Gasgeschwindigkeiten zu erreichen. Der Einlasskanal, welcher im tieferen Drehzahlbereich als erster öffnet, ist für die grösste Gasgeschwindigkeit ausgelegt. In den aufeinanderfolgend später öffnenden Einlasskanälen ist die Gasgeschwindigkeit jeweils langsamer, aber der Druck nimmt zu. Unter diesen Bedingungen wird der Zylinder bei zunehmender Hubgeschwindigkeit und Stellung des Kolbens optimal beschickt und der erwünschte Strudel bremst auch bei maximalen Hub nicht ab.

Zusammengefasst ergeben sich bei dem Mehrventilmotor mit richtungsgetrennten Einlasskanälen die Vorteile, dass sich ein ununterbrochener Strudel im Zylinder, eine drehmomentgünstige Gassäulen-Regulierung, eine grosse Ventilzeiten-Ueberschneidung realisieren lassen und was im Ergebnis zu einer Optimierung der Kraftstoffaufbereitung aufgrund der jedem Einlasskanal zugeordneten Luftklappe und Einspritzung, ferner zu grösstmöglichen Füllmengen durch lange Ueberschneidungszeiten und drehzahlabhängige Gassäulen-Steuerung, ferner zu einer schnellen optimalen Verbrennung durch kräftige Turbulenz während des gesamten Drehmomentverlaufs und zu höherer Maximalleistung bei guter Drehmomentcharakteristik durch variable Kanal-Zuschaltung führt.

**Patentansprüche**

1. Verbrennungsmotor mit mindestens einem Auslassventil (9) und mehr als einem Einlassventil (5) pro Zylinder, wobei jedem der Einlassventile (5) ein separater, von dem Ventil verschliessbarer Einlasskanal (2, 3, 10, 11) zugeordnet ist und jeder Einlasskanal eine getrennt betätigbare Luftklappe (6) sowie eine Kraftstoffzuführung (7) aufweist, dadurch gekennzeichnet, dass die Einlasskanäle (2, 3, 10, 11) in einer in die gleiche Umfangsrichtung geneigten Schrägstellung in den Zylinderkopf (1) münden zwecks Erzeugung eines ununterbrochenen Gasstrudels im Zylinder.

2. Verbrennungsmotor nach Anspruch 1, dadurch gekennzeichnet, dass von einer Mehrzahl der getrennten Einlasskanäle (2, 3, 10, 11) mindestens einer im wesentlichen sich von oben in Zylinderachsrichtung und mindestens ein weiterer sich von der Seite und schräg zur Zylinderachsrichtung erstreckt und in den Zylinderkopf (1) mündet.

3. Verbrennungsmotor nach Anspruch 1, dadurch gekennzeichnet, dass mindestens zwei im wesentlichen von oben in Zylinderachsrichtung sich erstreckende getrennte Einlasskanäle (2, 3) in den Zylinderkopf (1) münden.

4. Verfahren zum Betrieb des Verbrennungsmotors nach einem der Ansprüche 1 bis 3, dadurch gekennzeichnet, dass für niedrige Motordrehzahlen mindestens ein Einlasskanal mittels der Luftklappe geöffnet wird und dass für steigende Motordrehzahlen die Einlasskanäle zeitlich gestaffelt mittels der jeweiligen Luftklappe geöffnet werden und dass der vom Auslassventil am weitesten entfernt liegende Einlasskanal als erster geöffnet wird und dass aufgrund unterschiedlicher Kanalquerschnitte für stufenweise geringere Gasgeschwindigkeiten ausgelegte Einlasskanäle aufeinanderfolgend geöffnet werden.

5. Verfahren nach Anspruch 4, dadurch gekennzeichnet, dass der Motor in bezug auf den Ansaugtakt und Auspufftakt mit Ventilüberschneidungszeiten betrieben wird und dass der als erster geöffnete Einlasskanal eine längere Ventilüberschneidungszeit mit dem letztschliessenden, entferntesten Auslassventil als die übrigen Einlasskanäle hat.

**Claims**

1. Combustion engine with at least one exhaust valve (9) and more than one inlet valve (5) per cylinder, whereby a separate intake port (2, 3, 10, 11) is assigned to each inlet valve and each intake port is controlled by an individual air throttle (6) and fuel supply (7), hereby characterised, that the intake ports (2, 3, 10, 11) join the cylinderhead (1) at an angle in the same circumferential direction, so that a continuous unidirectional gas whirl is achieved in the cylinder.

2. Combustion engine as in claim 1, hereby characterised, that of the multiple separate intake ports (2, 3, 10, 11) at least one joins the cylinderhead (1) essentially from the top and at least one other joins from the side at an angle to the direction of the cylinder axis.

3. Combustion engine as in claim 1, hereby characterised, that at least two separate intake ports (2, 3) join the cylinderhead (1) essentially from the top in the direction of the cylinder axis.

4. Procedure to operate the combustion engine according to claims 1-3, hereby characterised that at low revolutions (rpm) the air throttle of at least one intake port is opened, whereas at rising rpm the throttles of the other intake ports are gradually opened at set timings; and that the intake port which is furthest from the exhaust valve opens first; whereby the diametrically different sized intake ports, generating gradually slower gas speeds, are opened successively.

5. Procedure to claim 4, hereby characterised, that the engine operates whith different overlapping valve timings between intake and exhaust, whereby the first opening inlet valve has a longer overlapping time with the furthest positioned, latest closing exhaust valve than the other inlet valves.

**Revendications**

1. Moteur à combusion interne comprenant au moins une soupape d'échappement (9) et plus d'une soupape d'admission (5) par cylindre, à chaque soupape d'admission (5) étant associé à un canal d'admission (2) et chaque canal d'admission comprenant un clapet d'air (6) séparément actionnable ainsi qu'un conduit d'amenée de combustible (7), caractérisé en ce que les canaux d'admission (2, 3, 10, 11) débouchent dans la culasse de cylindre (1) à des positions obliques inclinées dans le même sens périphérique pour la production dans le cylindre d'un tourbillon de gaz ininterompu.

2. Moteur à combustion interne selon la revendication 1, caractérisé en ce que, d'une pluralité de canaux d'admission séparée (2, 3, 10, 11), au moins un s'étend sensiblement d'en haut dans la direction de l'axe de cylindre et au moins un autre depuis le côté et obliquement par rapport à la direction d'axe de cylindre et débouche dans la culasse (1).

3. Moteur à combustion interne selon la revendication 1, caractérisé en ce qu'au moins deux canaux d'admission (2, 3) séparés débouchent dans la culasse (1), en s'étendant sensiblement d'en haut dans le sens de l'axe de cylindre.

4. Procédé pour le fonctionnement du moteur à combustion interne selon l'une des revendications 1 à 3, caractérisé en ce qu'au moins pour des nombres de tours de moteur faibles, au moins un canal d'admission est ouvert par l'intermédiaire du clapet d'air et en ce que, pour des nombres de tours de moteur croissants, les canaux d'admission sont ouverts de façon décalée dans le temps, à l'aide du clapet d'air respectif, et en ce que le canal d'admission le plus éloigné de la soupape d'échappement est ouvert en premier et en ce que des canaux d'admission dimensionnés en raison de section transversales de canal différentes pour des vitesses de gaz plus faibles par paliers, sont successivement ouverts.

5. Procédé selon la revendication 4, caractérisé en ce que le moteur est actionné par rapport au temps d'admission et au temps d'échappement à des temps de chevauchement de soupapes et en ce que le canal d'admission ouvert en premier présente un temps de chevauchement de soupape plus long, avec la soupape d'échappement la plus éloignée et fermant en dernier, que les autres canaux d'admission.

Fig. 1

Fig. 2

6

Fig. 3

Fig. 4

Fig. 5

Fig. 6